# EUROPEAN PATENT SPECIFICATION

(11) **EP 0 946 080 B1**
(45) Date of publication and mention of the grant of the patent: **12.02.2003**
(21) Application number: 98121906.6
(22) Date of filing: 18.11.1998
(51) Int. Cl.: H05B 3/36, H05B 6/02, H05B 6/06, H05B 6/40, H05B 6/44, H05B 6/10, B23K 3/00

(54) **High frequency heating coil device**
Heizgerät mit HF Spule
Dispositif de chauffage à bobine haute fréquence

(30) Priority: 23.03.1998 JP 7412298
(43) Date of publication of application: 29.09.1999
(73) Proprietor: Mitsubishi Heavy Industries, Ltd., Tokyo 100-0005 (JP)
(72) Inventor: Kawano, Takayuki, c/o Nagasaki Research & Devel., Nagasaki-shi, Nagasaki-ken (JP); Shimamoto, Takijiro, c/o Choryo Engineering Co., Nagasaki-shi, Nagasaki-ken (JP); Terasaki, Masanori, c/o Dai-ichi High Frequency Co, Tokyo (JP)
(74) Representative: Henkel, Feiler, Hänzel

(56) References cited:
- EP-A- 0 848 577
- PATENT ABSTRACTS OF JAPAN vol. 095, no. 008, 29 September 1995 & JP 07 114984 A (MITSUBISHI HEAVY IND LTD), 2 May 1995

## Description

### BACKGROUND OF THE INVENTION:

### Field of the Invention:

The present invention relates to a high frequency heating coil device, inserted into a slotted hole of an object to be heated, for heating said object to be heated, and more specifically to a high frequency heating coil device which is made flexible so as to be inserted easily into the hole of the object to be heated in a place where there is an obstruction.

### Description of the Prior Art:

When a steam turbine casing or the like is fastened by bolt, in order to ensure the fastening, work is done such that the bolt is first heated to be elongated and then nut is fastened. Also, when the steam turbine casing or the like is opened for maintenance inspection, the bolt which fastens the turbine casing or the like is heated to be elongated and then the nut is unfastened.

As a means so heating the bolt, there is known a high frequency heating coil device in which a high frequency current is supplied to a coil. This high frequency heating coil device is formed in a slender bar shape and is inserted into a slotted hole bored in the bolt along a central axis thereof to heat the bolt rapidly from an interior thereof.

The high frequency heating coil device is used, being inserted in the slotted hole of the object to be heated, such as the bolt, as mentioned above. But in the steam turbine casing or the like which is fastened by bolt, there exists often an obstruction above the bolt and in such case, a rigid and linearly formed high frequency heating coil device in the prior art, having no flexibility, cannot be inserted into the hole of the bolt.

In order to dissolve such problem, the inventors here have heretofore proposed a high frequency heating coil device (Japanese laid-open patent application No. Hei 7-114984) wherein, although not shown, a magnetic substance disposed between conductive tubes, which constitute U-shaped coils, is sectioned into plural pieces so as to be given a flexibility, thereby if there is an obstruction near a bolt, the entire coil device is bent to be inserted into a hole of the bolt and this is applied also to a case of drawing the coil device out of the hole of the bolt.

In the prior art device mentioned above, however, the magnetic substance is sectioned into plural pieces so that upper and lower end faces of each piece of the magnetic substance are orthogonal to a central axis thereof, hence if the end faces make direct contact with each other between adjacent pieces, oblique motion between each piece becomes restricted so that bending of the magnetic substance is not effected well. On the other hand, in order to ensure the flexibility enough, it is necessary to provide a gap between each piece of the magnetic substance and if such gap is provided, there occurs a fear that a magnetic flux leaks from the gap and a heating effect lowers.

### SUMMARY OF THE INVENTION:

In order to dissolve the problem in the prior art, therefore, it is an object of the present invention to provide a high frequency heating coil device, comprising a magnetic substance sectioned into plural pieces so as to be flexible enough, which is bent to be inserted into a slotted hole of a bolt easily even if there is an obstruction near the bolt and which is able to obtain a sufficient heating effect.

In order to attain said object, the present invention provides means of following (1) to (8):
(1) A high frequency heating coil device comprising a flexible coil bent in U-shape and arranged in an outer jacket which is made cylindrically of an insulating material and a magnetic substance arranged between the U-shape of said coil in a longitudinal direction thereof and sectioned in said direction into plural pieces, each piece making direct contact with adjacent pieces, characterized in that each said piece of the magnetic substance has its either end face, making direct contact with adjacent piece, formed in a curved face.
(2) A high frequency heating coil device as mentioned in (1) above, characterized in that each said piece of the magnetic substance has its transverse cross sectional shape formed with a width in a direction of curve of said curved face being smaller than that in an orthogonal direction thereto.
(3) A high frequency heating coil device as mentioned in (2) above, characterized in that there is provided a spacer made of a flexible and insulating material between a side face along said orthogonal direction of said magnetic substance and said coil.
(4) A high frequency heating coil device as mentioned in (3) above, characterized in that said coil of U-shape is made of a hollow tube and consists of a plurality of sets of coils, each set forming a pair of coils, arranged in a circle shape along an inner wall of said outer jacket.
(5) A high frequency heating coil device comprising a flexible coil bent in U-shape and arranged in an outer jacket which is made cylindrically of an insulating material and a magnetic substance arranged between the U-shape of said coil in a longitudinal direction thereof, characterized in that said magnetic substance consists of magnetic particles contained in a flexible container.
(6) A high frequency heating coil device as mentioned in (5) above, characterized in that said container has its transverse cross sectional shape formed in an oblong shape in which one width is smaller than the other.
(7) A high frequency heating coil device as mentioned in (6) above, characterized in that there is provided a spacer made of a flexible and insulating material between a side face, width thereof being larger than the other, of said container and said coil.
(8) A high frequency heating coil device as mentioned in (7) above, characterized in that said coil of U-shape is made of a hollow tube and consists of a plurality of sets of coils, each set forming a pair of coils, arranged in a circle shape along an inner wall of said outer jacket.

Generally, a high frequency heating coil device is inserted into a hole of an object to be heated, a bolt for example, and a high frequency current is supplied to a coil to heat the bolt rapidly, thus the bolt is thermally elongated so that fastening force of nut is weakened and unfastening of the nut becomes facilitated, or reversely, while the bolt is heated, the nut is fastened so that fastening force of the bolt is ensured.

In the high frequency heating coil device of the invention of (1) above, even in the case where there is an obstruction in the work place and a linearly formed coil device cannot be inserted into the hole of the object to be heated, the outer jacket and the coil can be bent flexibly and the magnetic substance is sectioned into plural pieces so that each piece thereof makes direct contact with adjacent pieces via the curved faces and can be inclined freely along the curved faces. Thereby, the high frequency heating coil device of the present invention can be bent freely as a whole to avoid the obstruction to be inserted into the hole of the object to be heated, the bolt for example, as well as to be drawn out of the hole. Also, the magnetic substance is arranged with each piece thereof making direct contact with each other so as to cause no gap therebetween, thereby leakage of magnetic flux is prevented and the object to be heated can be heated efficiently.

In the invention of (2) above, the width in the direction of curve of the curved face is made smaller than that in the orthogonal direction thereto, thereby the magnetic substance becomes able to be bent easily along the curved faces and if the high frequency heating coil device is bent in the direction along the curved faces of each piece of the magnetic substance, the entire coil device can be bent easily.

In the invention of (3) above, there is provided the spacer between the magnetic substance and the coil, thereby the magnetic substance and the coil are prevented from making direct contact therebetween and the coil of U-shape can be arranged appropriately relative to the outer jacket.

In the invention of (4) above, the coil of U-shape is made of a tube of comparatively small diameter so as to be bent easily and the plurality of coils are arranged in a circle shape along the inner wall of the outer jacket by the spacer, thereby the coils are arranged uniformly along the inner wall of the outer jacket and the object to be heated, the bolt for example, can be heated uniformly along the inner wall of the hole thereof.

In the invention of (5) above, the magnetic substance consists of magnetic particles, which are contained in the flexible container, thereby the magnetic substance itself can be bent freely and the high frequency heating coil device can be bent freely as a whole to avoid the obstruction to be inserted into the hole of the object to be heated as well as to be drawn out of the hole, like in the invention of (1) above.

In the invention of (6) above, the container in which the magnetic substance consisting of the magnetic particles is contained has its transverse cross sectional shape formed in the oblong shape, thereby if the high frequency heating coil device is bent in the direction of the smaller width, it can be bent easily and inserted more smoothly into the hole of the object to be heated.

In the invention of (7) above, there is provided the spacer, thereby insulating ability between the magnetic substance and the coil is enhanced and the coil of U-shape can be arranged appropriately relative to the outer jacket, like in the invention of (3) above.

In the invention of (8) above, the coil is made of a tube of small diameter so as to be bent easily and the plurality of coils are arranged in a circle shape along the inner wall of the outer jacket by the spacer, like in the invention of (4) above, thereby the coils are arranged uniformly along the inner wall of the outer jacket and the object to be heated can be heated uniformly along the inner wall of the hole thereof.

### BRIEF DESCRIPTION OF THE DRAWINGS:

Fig. 1 is a longitudinal cross sectional view of a high frequency heating coil device of a first embodiment according to the present invention.
Fig. 2 is a cross sectional view taken on line A-A of Fig. 1.
Fig. 3 is a perspective view of a magnetic substance, wherein Fig. 3(a) shows one piece of the magnetic substance arranged longitudinally and Fig. 3(b) shows two pieces of the magnetic substance arranged being bent to each other.
Fig. 4 is a side view showing state of the high frequency heating coil device of the first embodiment in a process of being inserted into a hole of bolt.
Fig. 5 is a side view showing state of the bolt of Fig. 4 being heated by the high frequency heating coil device of the first embodiment.
Fig. 6 is a side view of another example of the magnetic substance of the high frequency heating coil device of the first embodiment.
Fig. 7 is a longitudinal cross sectional view of a high frequency heating coil device of a second embodiment according to the present invention.
Fig. 8 is a cross sectional view taken on line B-B of Fig. 7.
Fig. 9 is a longitudinal cross sectional view of another example of the high frequency heating coil device of the second embodiment.

### DESCRIPTION OF THE PREFERRED EMBODIMENTS:

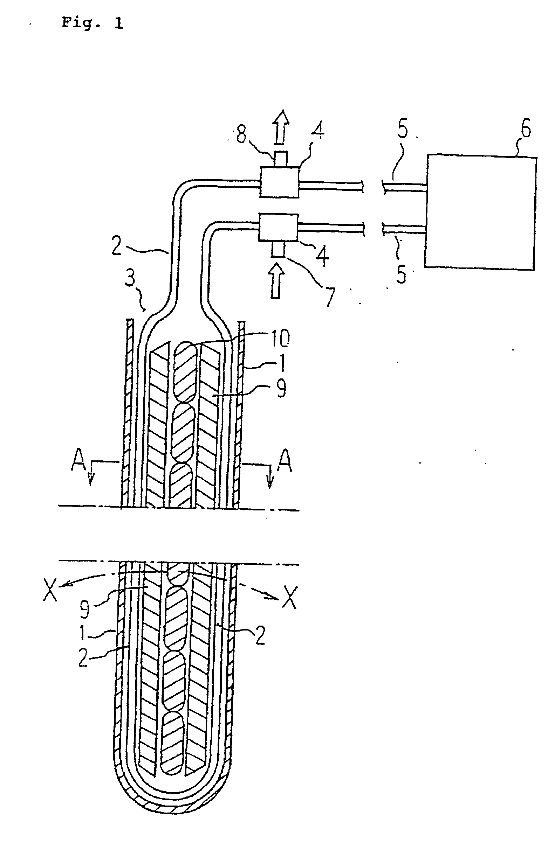

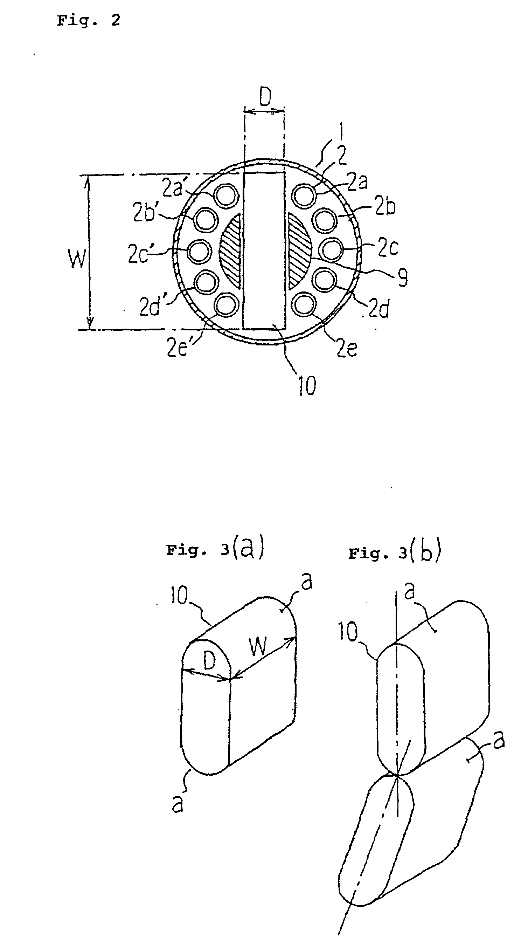

Herebelow, description will be made concretely on embodiments according to the present invention with reference to figures. Fig. 1 is a longitudinal cross sectional view of a high frequency heating coil device of a first embodiment, Fig. 2 is a cross sectional view taken on line A-A of Fig. 1 and Fig. 3 is a perspective view of a magnetic substance, wherein Fig. 3(a) shows one piece of the magnetic substance arranged longitudinally and Fig. 3(b) shows two pieces of the magnetic substance arranged being bent to each other.

In Figs. 1 and 2, an outer jacket 1 is an elongated hollow body made of a flexible, heat resistant and insulating material, such as polytetrafluoroethylene and the like, for example. Within the outer jacket 1, there are inserted a plurality of coils 2, each being bent in U-shape, and in the present embodiment, as shown in a cross section of Fig. 2, five coils are contained, being arranged in a circle shape, within the outer jacket 1, wherein each coil forms a pair of sectioned tubes in Fig. 2, that is, 2a and 2a', 2b and 2b', 2c and 2c', 2d and 2d' and 2e and 2e'. The coil 2 has a flexibility so as to be bent sufficiently and is made of a hollow tube of steel, copper or brass which is annealed enough to be given the flexibility.

Both upper end portions of the coil 2 elongate upward from an upper end opening portion 3 of the outer jacket 1 to be connected at end portions thereof to electrodes 4. The electrodes 4 connect to an electric source 6 via flexible cables 5. The electric source 6 supplies the coil 2 with a high frequency current. At one of the electrodes 4, there is provided a water supply portion 7 and at the other thereof, provided is a drain portion 8. Cooling water is supplied into the coil 2 from the water supply portion 7 to flow through the coil 2 for cooling thereof and to be drained from the drain portion 8.

Plural pieces of magnetic substance 10 are disposed in an upward and downward direction between the coils 2 bent in U-shape. Also, a spacer 9 is disposed in the upward and downward direction between the coils 2 and the magnetic substance 10. The spacer 9 is made of a flexible, heat resistant and insulating material, such as heat resistant plastics of Teflon or the like, and functions as a filler for arranging the plurality of coils 2a and 2a', 2b and 2b', 2c and 2c', 2d and 2d' and 2e and 2e' in a circle shape along an inner wall of the outer jacket 1. A multiplicity of pieces of the magnetic substance 10 are arranged in a longitudinal direction of the coils 2 and each piece of the magnetic substance 10 has its upper end face and lower end face formed in curved faces a respectively, as shown in Fig. 3(a).

Each piece of the magnetic substance 10 is arranged in the longitudinal direction of the coils 2 with its upper end face and lower end face being in direct contact with each other between the adjacent pieces of the magnetic substance 10. Also, in a transverse or horizontal cross section of each piece of the magnetic substance 10, a width D in a direction of curve of the curved face a as shown in Fig. 3(a) is smaller than a width W in an orthogonal direction thereto.

Accordingly, each piece of the magnetic substance 10 can be arranged in a bent form to each other between adjacent pieces which are in direct contact with each other as shown in Fig. 3(b) and thus the present high frequency heating coil device can be bent sufficiently in the direction of curve of the curved face a (in a direction of arrow X in Fig. 1). Also, number of pieces of the magnetic substance 10 can be changed easily so as to correspond to the length of the coils 2.

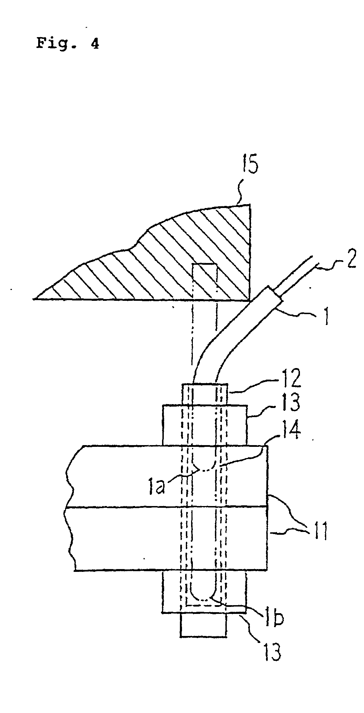

The high frequency heating coil device of the first embodiment is constructed as mentioned above and can be inserted easily into the hole of the object to be heated, such as bolt or the like, even in a case where there is a structure which is obstructive right above the object to be heated. That is, in Fig. 4 which is a side view showing state of the high frequency heating coil device of the first embodiment in a process of being inserted into the hole of the bolt which fastens flanges of equipment, flanges 11 are fastened by bolt 12 and nuts 13 and a hole 14 is bored in the bolt 12. Right above the bolt 12, there exists an obstruction 15 which will obstruct a high frequency heating coil device to be inserted into the bolt 12 if that high frequency heating coil device is not flexible.

According to the high frequency heating coil device of the present invention, however, it consists of the outer jacket 1 and the spacer 9, both made of a flexible and insulating material, as well as consists of the coils 2 made of flexible small diameter tubes of copper, brass or the like, hence as shown in Fig. 4, the high frequency heating coil device at its front end is inserted gradually into the hole 14 of the bolt 12, while a portion of the coil device hitting the obstruction 15 right above the bolt 12 is bent to avoid the obstruction 15, and the outer jacket 1 can be inserted completely to a bottom of the hole 14, that is, from position 1a to 1b shown in Fig. 4. In this case, each piece of the magnetic substance 10 arranged to make direct contact between adjacent ones as shown in Fig. 3(b) is bent to each other so as to conform to a curvature of the outer jacket 1 and the spacer 9.

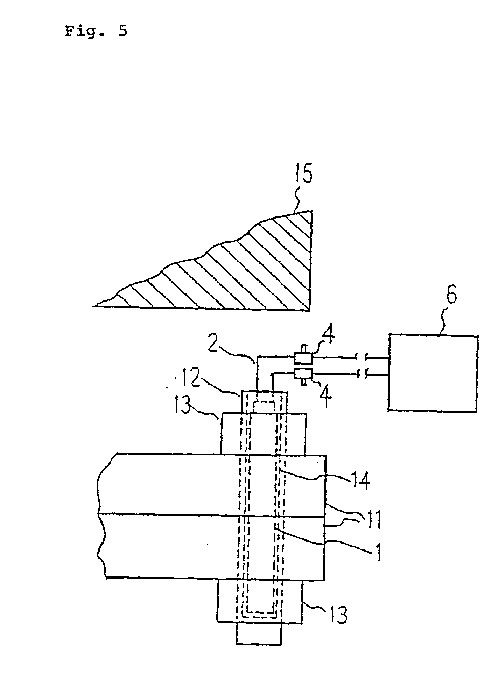

Fig. 5 is a view showing state of the bolt 12 being heated by the high frequency heating coil device which has been inserted completely into the hole 14 of the bolt 12 as mentioned above. In Fig. 5, the high frequency heating coil device is inserted into the hole 14 bored along a central axis of the bolt 12 and a high frequency current is supplied to the coils 2 from the electric source 6 via the electrodes 4. Then, there occurs an eddy current in an inner surface of the hole 14 of the bolt 12 and the bolt 12 is thereby heated rapidly. At this time, cooling water is supplied into the coils 2 from the water supply portion 7 and is drained from the drain portion 8, thereby the coils 2 are prevented from being heated unnecessarily.

The high frequency heating coil device mentioned above has a flexibility enough and even if there is an obstruction right above the bolt 12, that coil device can be bent freely to be inserted into the hole 14 of the bolt 12 and likewise can be drawn out of the hole 14.

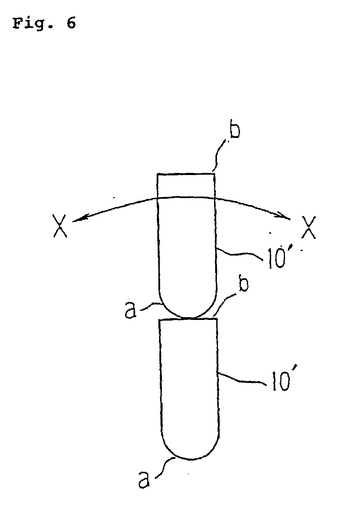

Fig. 6 is a side view of another example of the magnetic substance of the high frequency heating coil device of the first embodiment. In the present example, each piece of magnetic substance 10' has its lower face only formed in a curved face a with its upper face remaining a flat face b. Other parts of the construction are same as those in Figs. 1 and 2. Even if the pieces of such shape of the magnetic substance 10' are used, the magnetic substance 10' as a whole can be bent freely in a direction of arrow X, thus a high frequency heating coil device using such pieces of the magnetic substance 10' can be bent freely. That is, of the end faces making direct contact with each other between adjacent pieces of the magnetic substance, at least one of the end faces is formed in a curved face, thereby the high frequency heating coil device can be bent freely.

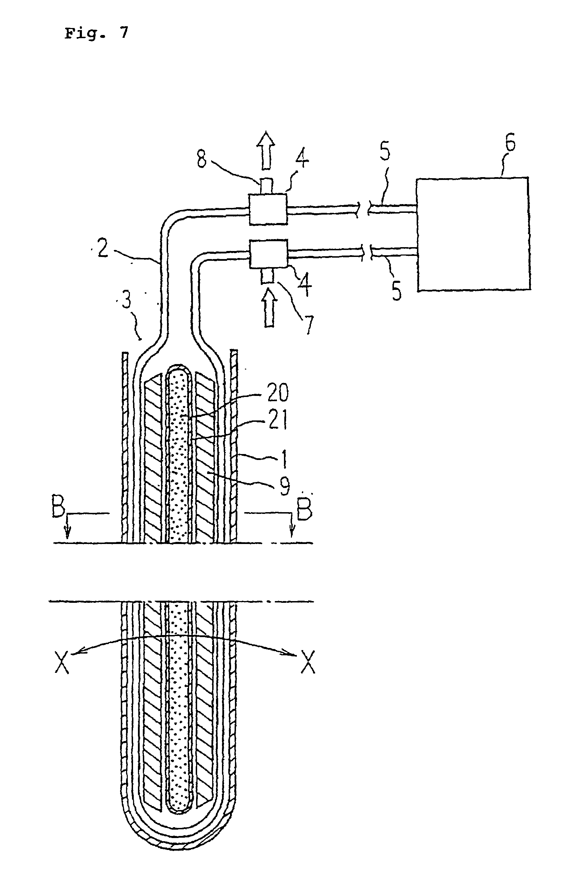

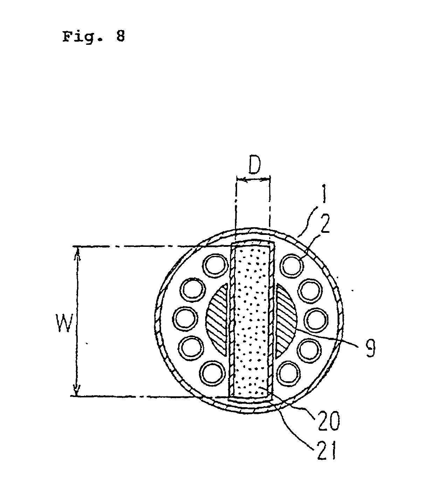

Fig. 7 is a longitudinal cross sectional view of a high frequency heating coil device of a second embodiment according to the present invention and Fig. 8 is a cross sectional view taken on line B-B of Fig. 7. In this second embodiment, in place of the plurality of pieces of the magnetic substance 10 of the first embodiment, magnetic particles 20 are used and the magnetic particles 20 are contained in a container 21 which is elongated in the longitudinal direction of the coils 2. The container 21 is made of a flexible and heat resistant material. One width D of a transverse or horizontal cross section of the container 21 is made smaller than the other width W thereof, as shown in Fig. 8, hence the container 21 can bend freely in a direction of the smaller width D, that is, in a direction of arrow X of Fig. 7. Other parts of the construction are same as those of the first embodiment.

The way of usage of the high frequency heating coil device of the second embodiment is same as that of the first embodiment, that is, while the coil device is being bent freely, it is inserted into the hole 14 of the bolt 12 for heating thereof and is drawn out of the hole 14 of the bolt 12. Also, according to the second embodiment, form of the container 21 can be changed and then form of the transverse cross section of the magnetic substance consisting of the magnetic particles 20 also can be changed freely and same effect as that mentioned with respect to the first embodiment can be obtained.

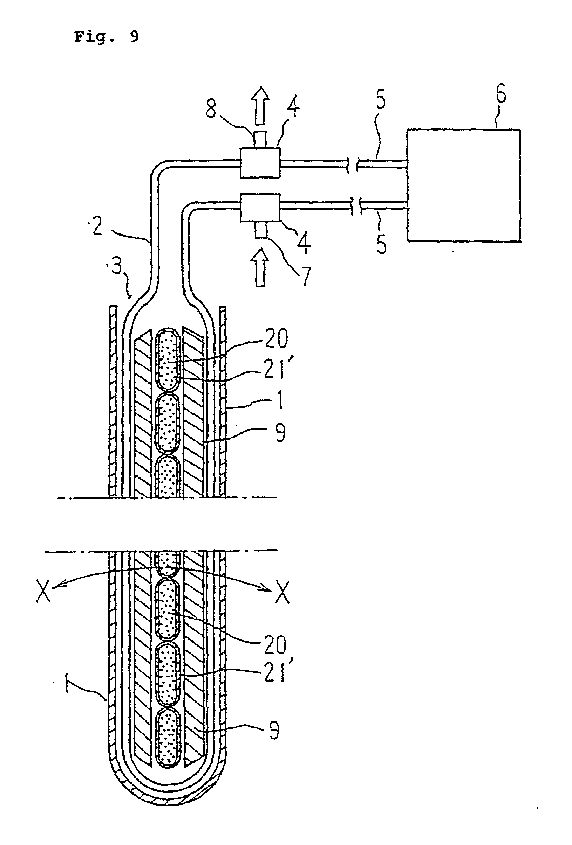

Fig. 9 is a longitudinal cross sectional view of another example of the high frequency heating coil device of the second embodiment according to the present invention. In Fig. 9, the container 21 containing therein the magnetic particles 20 is sectioned into plural pieces to form respective units of container 21'. By use of the units of the container 21' so sectioned, number of pieces thereof can be changed easily so as to correspond to the length of the coils 2.

It is understood that the invention is not limited to the particular construction and arrangement herein illustrated and described but embraces such modified forms thereof as come within the scope of the following claims.

## Claims

1. A high frequency heating coil device comprising a flexible coil (2) bent in U-shape and arranged in an outer jacket (1) which is made cylindrically of an insulating material and a magnetic substance (10) arranged between the U-shape of said coil (2) in a longitudinal direction thereof and sectioned in said direction into plural pieces, each piece making direct contact with adjacent pieces, **characterized in that** each said piece of the magnetic substance (10) has its either end face, making direct contact with adjacent piece, formed in a curved face (a).

2. A high frequency heating coil device as claimed in Claim 1, **characterized in that** each said piece of the magnetic substance (10) has its transverse cross sectional shape formed with a width (D) in a direction of curve of said curved face being smaller than that (W) in an orthogonal direction thereto.

3. A high frequency heating coil device as claimed in Claim 2, **characterized in that** there is provided a spacer (9) made of a flexible and insulating material between a side face along said orthogonal direction of said magnetic substance (10) and said coil (2).

4. A high frequency heating coil device as claimed in Claim 3, **characterized in that** said coil (2) of U-shape is made of a hollow tube and consists of a plurality of sets of coils, each set forming a pair of coils, arranged in a circle shape along an inner wall of said outer jacket (1).

5. A high frequency heating coil device comprising a flexible coil (2) bent in U-shape and arranged in an outer jacket (1) which is made cylindrically of an insulating material and a magnetic substance arranged between the U-shape of said coil (2) in a longitudinal direction thereof,
**characterized in that** said magnetic substance consists of magnetic particles (20) contained in a flexible container (21, 21').

6. A high frequency heating coil device as claimed in Claim 5, **characterized in that** said container (21, 21') has its transverse cross sectional shape formed in an oblong shape in which one width (D) is smaller than the other (W).

7. A high frequency heating coil device as claimed in Claim 6, **characterized in that** there is provided a spacer (9) made of a flexible and insulating material between a side face, width thereof being larger than the other, of said container (21, 21') and said coil (2).

8. A high frequency heating coil device as claimed in Claim 7, **characterized in that** said coil (2) of U-shape is made of a hollow tube and consists of a plurality of sets of coils, each set forming a pair of coils, arranged in a circle shape along an inner wall of said outer jacket (1).

## Patentansprüche

1. Hochfrequenz-Heizspulenvorrichtung mit einer flexiblen Spule (2), die in U-Form gebogen und in einem äußeren Mantel (1) angeordnet ist, der zylinderförmig aus einem Isoliermaterial gefertigt ist, und einer magnetischen Substanz (10), welche zwischen der U-Form der Spule (2) in einer Längsrichtung derselben angeordnet und in der Richtung in mehrere Teile aufgeteilt ist, wobei jedes Teil direkten Kontakt mit benachbarten Teilen hat, **dadurch gekennzeichnet, dass** jedes Teil der magnetischen Substanz (10) eine seiner Endflächen, die direkten Kontakt mit einem angrenzenden Teil herstellen, in einer gekrümmten Fläche (a) ausgebildet hat.

2. Hochfrequenz-Heizspulenvorrichtung nach Anspruch 1, **dadurch gekennzeichnet, dass** jedes Teil der magnetischen Substanz (10) seine Querschnittsform mit einer Breite (D) in einer Krümmungsrichtung der gekrümmten Fläche ausgebildet hat, die kleiner ist als diejenige (W) in einer zu dieser orthogonalen Richtung.

3. Hochfrequenz-Heizspulenvorrichtung nach Anspruch 2, **dadurch gekennzeichnet, dass** ein Abstandshalter (9), der aus einem flexiblen und isolierenden Material zwischen einer Seitenfläche entlang der orthogonalen Richtung der magnetischen Substanz (10) und der Spule (2) gefertigt ist, vorgesehen ist.

4. Hochfrequenz-Heizspulenvorrichtung nach Anspruch 3, **dadurch gekennzeichnet, dass** die U-förmige Spule (2) aus einem hohlen Rohr gefertigt ist und aus mehreren Sätzen von Spulen besteht, wobei jeder Satz ein Spulenpaar bildet, das in einer Rundform entlang einer Innenwand des äußeren Mantels (1) angeordnet ist.

5. Hochfrequenz-Heizspulenvorrichtung mit einer flexiblen Spule (2), die in U-Form gebogen und in einem äußeren Mantel (1) angeordnet ist, der zylindrisch aus einem Isoliermaterial gefertigt ist, und einer magnetischen Substanz, welche zwischen der U-Form der Spule (2) in deren Längsrichtung angeordnet ist, **dadurch gekennzeichnet, dass** die magnetische Substanz aus Magnetpartikeln (20) besteht, die in einem flexiblen Behälter (21, 21') enthalten sind.

6. Hochfrequenz-Heizspulenvorrichtung nach Anspruch 5, **dadurch gekennzeichnet, dass** der Behälter (21, 21') seine Querschnittsform in einer länglichen Form ausgebildet hat, in der eine Breite (D) kleiner ist als die andere (W).

7. Hochfrequenz-Heizspulenvorrichtung nach Anspruch 6, **dadurch gekennzeichnet, dass** ein aus einem flexiblen und isolierenden Material gefertigter Abstandshalter (9) zwischen einer Seitenfläche, deren Breite größer ist als die der anderen, des Behälters (21, 21') und der Spule (2) vorgesehen ist.

8. Hochfrequenz-Heizspulenvorrichtung nach Anspruch 7, **dadurch gekennzeichnet, dass** die U-förmige Spule (2) aus einem hohlen Rohr gefertigt ist und aus mehreren Sätzen von Spulen besteht, wobei jeder Satz ein Spulenpaar bildet, das in einer Kreisform entlang einer Innenwand des äußeren Mantels (1) angeordnet ist.

## Revendications

1. Dispositif de chauffage à bobine haute fréquence comprenant une bobine souple (2) courbée en forme de U et placée dans une gaine cylindrique extérieure (1) faite d'un matériau isolant et d'une substance magnétique (10) placée entre la forme en U de ladite bobine (2) dans sa direction longitudinale et partagée dans ladite direction en plusieurs pièces, chaque pièce étant en contact direct avec des pièces adjacentes, **caractérisé en ce que** chacune desdites pièces de la substance magnétique (10) a chacune de ses faces d'extrémité en contact direct avec une pièce adjacente présentant une face courbe (a).

2. Dispositif de chauffage à bobine haute fréquence selon la revendication 1, **caractérisé en ce que** la section transversale de chacune desdites pièces de la substance magnétique (10) a une largeur (D) dans une direction de courbe de ladite face courbe qui est plus petite que celle (W) dans une direction orthogonale à celle-ci.

3. Dispositif de chauffage à bobine haute fréquence selon la revendication 2, **caractérisé en ce qu'**il est prévu une pièce d'écartement (9) faite d'un matériau souple et isolant entre une face latérale le long de ladite direction orthogonale de ladite substance magnétique (10) et ladite bobine (2).

4. Dispositif de chauffage à bobine haute fréquence selon la revendication 3, **caractérisé en ce que** ladite bobine (2) ayant une forme en U est faite d'un tube creux et consiste en une pluralité d'ensembles de bobines, chaque ensemble formant une paire de bobines, disposées en cercle le long d'une paroi intérieure de ladite gaine extérieure (1).

5. Dispositif de chauffage à bobine haute fréquence comprenant une bobine souple (2) courbée en forme de U et placée dans une gaine cylindrique extérieure (1) faite d'un matériau isolant et d'une substance magnétique placée entre la forme en U de ladite bobine (2) dans sa direction longitudinale, **caractérisé en ce que** ladite substance magnétique est composée de particules magnétiques (20) contenues dans un récipient souple (21, 21').

6. Dispositif de chauffage à bobine haute fréquence selon la revendication 5, **caractérisé en ce que** la section transversale dudit récipient (21, 21') a une forme allongée dans laquelle une largeur (D) est plus petite que l'autre (W).

7. Dispositif de chauffage à bobine haute fréquence selon la revendication 6, **caractérisé en ce qu'**il est prévu un dispositif d'écartement (9) fait d'un matériau souple et isolant entre une face latérale, dont la largeur est plus grande que l'autre, dudit récipient (21, 21') et ladite bobiné (2).

8. Dispositif de chauffage à bobine haute fréquence selon la revendication 7, **caractérisé en ce que** ladite bobine (2) ayant une forme en U est faite d'un tube creux et consiste en une pluralité d'ensembles de bobines, chaque ensemble formant une paire de bobines, disposées en cercle le long d'une paroi intérieure de ladite gaine extérieure (1).
